# EUROPÄISCHE PATENTSCHRIFT

(11) **EP 3 346 416 B1**
(45) Veröffentlichungstag und Bekanntmachung des Hinweises auf die Patenterteilung: **28.04.2021**
(21) Anmeldenummer: 18150235.2
(22) Anmeldetag: 03.01.2018
(51) Int. Cl.: G06F 21/87

(54) **ELEKTRONISCHES MODUL MIT ERHÖHTER SICHERHEIT VOR MANIPULATION**
ELECTRONIC MODULE WITH ENHANCED SAFETY AGAINST MANIPULATION
MODULE ÉLECTRONIQUE À PROTECTION CONTRE LES MANIPULATIONS ACCRUE

(30) Priorität: 05.01.2017 DE 102017200120
(43) Veröffentlichungstag der Anmeldung: 11.07.2018
(73) Patentinhaber: Fraunhofer-Gesellschaft zur Förderung der angewandten Forschung e.V., 80686 München (DE)
(72) Erfinder: NDIP, Ivan, 13469 Berlin (DE); PÖTTER, Harald, 16540 Hohen Neuendorf (DE); OSTMANN, Andreas, 10585 Berlin (DE)
(74) Vertreter: Hersina, Günter

(56) Entgegenhaltungen:
- DE-T2- 3 789 002
- OSCAR POZZOBON ET AL: "Security considerations in the design of tamper resistant GNSS receivers", SATELLITE NAVIGATION TECHNOLOGIES AND EUROPEAN WORKSHOP ON GNSS SIGNALS AND SIGNAL PROCESSING (NAVITEC), 2010 5TH ESA WORKSHOP ON, IEEE, 8. Dezember 2010 (2010-12-08), Seiten 1-5, XP031898935, DOI: 10.1109/NAVITEC.2010.5708066 ISBN: 978-1-4244-8740-0
- PAUL P ET AL: "Tamper Protection for Security Devices", BIO-INSPIRED LEARNING AND INTELLIGENT SYSTEMS FOR SECURITY, 2008. BLISS '08. ECSIS SYMPOSIUM ON, IEEE, PISCATAWAY, NJ, USA, 4. August 2008 (2008-08-04), Seiten 92-96, XP031303606, ISBN: 978-0-7695-3265-3

## Beschreibung

Die vorliegende Erfindung bezieht sich auf ein elektronisches Modul zum Bereitstellen einer elektronischen Funktionalität. Ausführungsbeispiele beziehen sich auf ein elektronisches Modul zum Bereitstellen einer elektronischen Funktionalität mit einer erhöhten Sicherheit vor Datenmissbrauch und Produktmanipulation.

Elektronische bzw. mikroelektronische Geräte oder Module können unterschiedlichen "Angriffen" hinsichtlich eines unerlaubten Zugriffs ausgesetzt sein. Ein unerlaubter Zugriff kann sich sowohl auf ein unberechtigtes Auslesen und/oder eine unberechtigte Manipulation von gespeicherten Daten als auch auf die unberechtigte Aneignung von technologischem Knowhow (z.B. Reverse Engineering) beziehen. Das sogenannte "Reverse Engineering" basiert (sinngemäß) darauf, elektronische Module, z.B. von Wettbewerbern, gezielt zu zerlegen, um einen Hinweis auf Aufbau-, Konstruktions- und Fertigungsprinzipien dieser elektronischen Module zu erhalten. Solchen Angriffen auf gespeicherte Daten kann beispielsweise durch eine Verschlüsselung der Daten, durch umfangreiche Pin-Codes (PIN = Persönliche Identifikationsnummer) oder auch physisch durch eine Erhöhung der Komplexität des Schichtaufbaus des elektronischen Moduls und durch den Einbau spezifischer Schutzstrukturen und/oder der Erhöhung der Komplexität der elektronischen Schaltung, insbesondere der entsprechenden Verdrahtung bzw. Metallisierung, entgegengewirkt werden. Ein angemessener physikalischer Schutz der Daten und auch der verbauten elektronischen Bauteile der integrierten Schaltungsanordnung konnte bisher jedoch nicht erreicht werden.

Die unberechtigte Manipulation von sensitiven Daten, die in elektronischen Systemen gespeichert sind, kann schwerwiegende Konsequenzen haben. So können Anordnungen, deren elektronische Systeme manipuliert sind, zu Materialbeschädigungen oder sogar bei Unfällen zu Verletzungen von Bedienpersonen oder sogar zum Verlust von Menschenleben führen. Daher besteht insbesondere bei neu zu entwickelnden elektronischen Systemen und Modulen der Bedarf danach, diese ausreichend und sachgerecht zu sichern, um einen nicht-autorisierten Zugriff auf die verbauten Schaltungsanordnungen und auf sensitive Daten, die in dem System gespeichert sind, zu verhindern. Gegenwärtig werden Hardware-Sicherheitsmaßnahmen hauptsächlich unter Verwendung von sogenannten "physikalisch nicht-klonbaren Funktionen (PuF = Physically Unclonable Functions) implementiert, wobei dies hauptsächlich auf der IC-Ebene durchgeführt wird.

Aus DE3789002T2 ist weiters bereits ein gegen unbefugte Manipulation geschütztes Gehäuse zum Schutz von Informationen, die in einem elektronischen Schaltkreis gespeichert sind, bekannt.

Ausgehend von diesem Stand der Technik liegt der vorliegenden Erfindung die Aufgabe zugrunde, ein elektronisches Modul zum Bereitstellen einer elektronischen Funktionalität zu schaffen, das hinsichtlich unberechtigten Zugriffsversuchen und Manipulationen eine verbesserte Sicherheitsfunktionalität aufweist.

Diese Aufgabe wird durch den Gegenstand der unabhängigen Patentansprüche gelöst. Erfindungsgemäße Weiterbildungen sind in den Unteransprüchen definiert.

Ausführungsbeispiele schaffen ein elektronisches Modul zum Bereitstellen einer elektronischen Funktionalität - mit einem Gehäuse mit einem ersten, zweiten und dritten Gehäuseabschnitt, wobei der erste Gehäuseabschnitt zumindest bereichsweise zwischen dem zweiten und dritten Gehäuseabschnitt angeordnet ist, und wobei der erste, zweite und dritte Gehäuseabschnitt jeweils leitfähige Wandbereiche aufweist, - mit einer integrierten Schaltungsanordnung zum Bereitstellen der elektronischen Funktionalität des elektronischen Moduls, wobei die integrierte Schaltungsanordnung in dem ersten Gehäuseabschnitt angeordnet ist, - mit einer Überwachungsfeld-Erzeugungsanordnung zum Erzeugen von Feldkomponenten eines Überwachungsfelds in dem zweiten und dritten Gehäuseabschnitt, - mit einer Überwachungsfeld-Erfassungsanordnung zum Erfassen von Feldkomponenten des Überwachungsfelds, z.B. an einer Mehrzahl von Messpositionen, in dem zweiten Gehäuseabschnitt und in dem dritten Gehäuseabschnitt und zum Bereitstellen einer Überwachungsinformation (bzw. eines Überwachungssignals) basierend auf den erfassten Feldkomponenten bzw. Intensitäten des Überwachungsfelds, und - mit einer Auswerteeinrichtung zum Vergleichen der Überwachungsinformation (bzw. des Überwachungssignals) mit einer gespeicherten Vergleichsinformation, um ein Vergleichsergebnis zu erhalten, das dann auf eine Manipulation des elektronischen Moduls hinweist, wenn das Überwachungssignal eine über einen vorgegebenen Toleranzbereich hinausgehende Abweichung von der Vergleichsinformation aufweist.

Ausführungsbeispiele des erfindungsgemäßen Konzepts ermöglichen eine erhöhte Hardware-Sicherheit, indem in einem elektronisches Modul oder Gerät Sicherheitsmaßnahmen bzw. Sicherheitsmerkmale auf der Packaging/System-Integrations-Plattformebene (Packaging = Gehäuse) implementiert werden. Üblicherweise ist die integrierte Schaltungsanordnung zum Bereitstellen der elektronischen Funktionalität des elektronischen Moduls bzw. Geräts, z.B. eines Handys, Notebooks, eines gehäusten Schaltungschips (z.B. Mikroprozessor), eines PCs, eines Geräts der Unterhaltungselektronik, etc. zum Zugriffsschutz in einem (soliden) Gehäuse untergebracht, so dass sich die integrierte Schaltungsanordnung des elektrischen Moduls in einem Innenvolumen des Gehäuses bzw. eines Gehäuseabschnitts befindet. Insbesondere sind die systemrelevanten Abschnitte und Teile der integrierten Schaltungsanordnung des elektronischen Moduls in dem Gehäuse untergebracht. Um einen unerlaubten bzw. unerwünschten Zugriff auf die integrierte Schaltungsanordnung des elektronischen Moduls bzw. eine nicht-autorisierte Manipulation zu verhindern, ist nun der Gehäuseabschnitt mit der integrierten Schaltungsanordnung zumindest bereichsweise und beispielsweise vollständig zwischen zwei weiteren Gehäuseabschnitten angeordnet bzw. eingebettet. Die (zumindest) zwei weiteren Gehäuseabschnitte definieren jeweils unterschiedliche und abgetrennte (i.W. abgeschlossene) Innenvolumenbereiche in dem Gehäuse.

Da die Gehäuseabschnitte, zwischen die der Gehäuseabschnitt mit der integrierten Schaltungsanordnung des elektronischen Moduls eingebettet ist, jeweils leitfähige Wandbereiche, d. h. zumindest bereichsweise eine Metallisierung aufweisende Wandbereiche, umfassen, können diese Gehäuseabschnitte mit dem definierten Innenvolumen sogenannte "Überwachungskavitäten" (Hohlräume) gegenüberliegend an der "Oberseite und Unterseite des Gehäuseabschnitts, in dessen Innenvolumen die integrierte Schaltungsanordnung des elektronischen Moduls angeordnet ist, bilden. Das gesamte elektronische Modul bzw. Gerät (Plattform) weist somit eine eingebettete ("vergrabene") System-Kavität, d.h. die Systemintegrationskavität mit der integrierten Schaltungsanordnung des elektronischen Moduls auf, die zwischen zumindest zwei Überwachungskavitäten eingebettet ist. Die Systemintegrationskavität kann beispielsweise aus einem Verbund mit einer oder mehreren dielektrischen und metallischen Schichten, z.B. eines Schaltungssubstrats, ausgebildet sein. So können integrierte Schaltungen der integrierten Schaltungsanordnung und optional weitere Systemkomponenten in diesen Gehäuseabschnitt, d.h. die Systemintegrationskavität, eingebettet sein.

Ferner kann nun eine Überwachungsfeld-Erzeugungsanordnung, z.B. in den Überwachungskavitäten bzw. entsprechenden Gehäuseabschnitten vorgesehen sein, um ein Überwachungsfeld in diesen Gehäuseabschnitten bzw. Überwachungskavitäten zu erzeugen. Das Überwachungsfeld wird bereitgestellt und zumindest eine bzw. zumindest zwei Feldkomponenten aus der nachfolgenden Aufzählung auf, die z.B. eine magnetische, elektrische, elektromagnetische, optische und im Ultraschallbereich liegende Überwachungsfeldkomponente aufweist. Dazu kann die Überwachungsfeld-Erzeugungsanordnung entsprechende Felderzeugungskomponenten aufweisen, wie z.B. eine oder mehrere Spulen, die in den Gehäuseabschnitten der Überwachungskavitäten angeordnet bzw. darin integriert sind. Alternativ oder zusätzlich können kapazitive Elemente, die durch entsprechend kapazitiv gekoppelte Wandbereiche des jeweiligen Gehäuseabschnitt gebildet sein können, vorgesehen sein, um die elektrischen Überwachungsfeldkomponenten mit einer reproduzierbaren Feldverteilung innerhalb der Überwachungskavitäten zu erzeugen. Ferner können entsprechende elektromagnetische Abstrahlelemente (Antennen), optische Abstrahlelemente, wie z.B. LEDs, Ultraschallabstrahlelemente etc. vorgesehen sein, um die jeweiligen Überwachungsfeldkomponenten oder eine Kombination der Überwachungsfeldkomponenten in den zugehörigen Gehäuseabschnitten (Überwachungskavitäten) zu erzeugen. Die obige Aufzählung von unterschiedlichen Überwachungsfeldkomponenten ist beispielhaft aber nicht als abschließend anzusehen.

Durch eine Kombination von Feldkomponenten des Überwachungsfelds kann ein fälschungssicheres und wenig störungsanfälliges Überwachungsfeld in den Überwachungskavitäten bereitgestellt werden, da einerseits eine stabil reproduzierbare Feldverteilung innerhalb der jeweiligen Überwachungskavität bereitgestellt werden kann und andererseits entsprechend der Kombination von Feldkomponenten des Überwachungsfelds auch mehrere Vergleichsinformationen abgeglichen werden können, um eine (zumindest versuchte) Manipulation des Moduls zu erfassen. So kann das Überwachungsfeld beispielsweise eine Kombination unterschiedlicher Feldkomponenten aufweisen. Das Überwachungsfeld kann ferner beispielsweise eine Kombination unterschiedlicher Frequenzen einer Feldkomponente aufweisen. Ferner kann das Überwachungsfeld auch eine Kombination unterschiedlicher Feldkomponenten aufweisen, wobei eine oder mehrere der unterschiedlichen Feldkomponenten auch unterschiedliche Frequenzen aufweisen kann.

Ausgehend beispielsweise von der Verwendung von Spulen in den Überwachungskavitäten können diese Spulen, wenn diese mit einem Strom durchflossen sind, abhängig von der jeweiligen Frequenz des Stromflusses entsprechend eine magnetische Komponente (H-Komponente), eine elektrische Komponente (E-Komponente) und/oder eine elektromagnetische Feldkomponente (EM-Feldkomponente) erzeugen. Diese Feldkomponenten können aufgrund der leitfähigen Ausgestaltung der Wandbereiche der Gehäuseabschnitte als dort eingefangen bzw. eingeschlossen (trapped) angesehen werden. In den Überwachungskavitäten können nun Erfassungselemente, z.B. Sensoren, vorgesehen sein, die jeweils die Intensität des an dem Ort der Sensoren anliegenden Feldkomponente erfassen und diese Intensitäten (oder davon abgeleitete Größen) als Überwachungssignal bzw. Überwachungsinformation an eine Auswerteeinrichtung, z.B. einen Mikrocontroller, weiterberichten können.

Um die Überwachungssicherheit zu erhöhen, können mehrere Erfassungselemente, die beispielsweise jeweils auch auf unterschiedliche Komponenten des Überwachungsfelds, z.B. auf eine magnetische, elektrische, elektromagnetische, optische oder im Ultraschallbereich liegende Komponente etc. ansprechen, innerhalb der Überwachungskavitäten verteilt angeordnet sein, um auf eine reproduzierbare Weise die Feldverteilung des Überwachungsfelds innerhalb der Überwachungskavitäten erfassen zu können.

Die erfassten Feldverteilungen bzw. die davon abgeleitete Überwachungsinformation (bzw. Überwachungsinformationen - auch Überwachungswert oder Überwachungssignal) können nun mit einer vorab ermittelten und abgespeicherten "Vergleichsinformation" (bzw. mit Vergleichsinformationen - auch Vergleichswert oder Vergleichssignal), die in einem z.B. nur von der Auswerteeinrichtung zugreifbaren nicht-flüchtigen Speicher der integrierten Schaltungsanordnung abgespeichert ist, verglichen werden. Diese ursprünglich bzw. initial abgespeicherten Feldkomponenten werden im Folgenden auch als Fingerabdruck (Fingerprint) der Überwachungskavitäten des elektronischen Moduls bezeichnet und sind z.B. in dem "sicheren" nicht-flüchtigen Speicher der integrierten Schaltungsanordnung ausschließlich für einen Zugriff durch die Auswerteeinrichtung hinterlegt.

Die Erfassungseinrichtungen bzw. Sensoren der Überwachungsfeld-Erfassungsanordnung zum Erfassen der Feldkomponenten bzw. Intensitäten des Überwachungsfelds können nun beispielsweise als Sensor-ICs oder integrierte Strukturen, wie z.B. integrierte Spulen, Kondensatoren, Antennen etc., ausgebildet sein, die die Feldkomponenten bzw. Feldintensitäten innerhalb der Überwachungskavitäten erfassen. Die Auswerteeinrichtung ist nun vorgesehen, um eine Überwachungsinformation (bzw. Überwachungsinformationen), die als digitale und/oder analoge Werte (Signalwerte und/oder davon abgeleitete Größen) vorliegen kann und die auf dem gemessenen Überwachungsfeldkomponenten bzw. den gemessenen Intensitäten des Überwachungsfelds basiert, mit dem (sicher) abgespeicherten Vergleichsinformation (Fingerprint) zu vergleichen, um ein Vergleichsergebnis zu erhalten. Das Vergleichsergebnis weist dann auf eine (zumindest versuchte) Manipulation des elektronischen Moduls hin, wenn die Überwachungsinformation eine über einen vorgegebenen Toleranzbereich hinausgehende Abweichung von der Vergleichsinformation aufweist.

Falls nun ein Manipulationsversuch (Tampering) an dem elektronischen Modul, d.h. an der integrierten Schaltungsanordnung innerhalb des inneren Gehäuseabschnitts, durchgeführt wird, wird für den Fall eines Eindringens bzw. eines Öffnens der Überwachungskavitäten durch die Erfassungselemente eine wahrnehmbare Änderung der Feldkomponenten, z.B. der E-, H- und/oder EM-Feldkomponente(n), des Überwachungsfelds erfasst werden, da sich die in den Überwachungskavitäten dann ausbildenden Feldkomponenten bzw. Intensitätswerte ausreichend deutlich von den ursprünglichen Feldkomponenten bzw. Intensitätswerten, d.h. von dem Fingerabdruck, unterscheiden werden. Mittels der Erfassungselemente (Sensoren) der Überwachungsfeld-Erfassungsanordnung können also die "neuen", auf eine Manipulation hinweisenden Feldkomponenten erfasst bzw. gemessen und der Auswerteeinrichtung zum Vergleich mit der (zugriffssicher abgespeicherten) Vergleichsinformation zugeführt werden. Somit weist das Vergleichsergebnis, das von der Auswerteeinrichtung erhalten wird, darauf hin, ob eine (zumindest versuchte) Manipulation des elektronischen Moduls vorliegt, wenn das Überwachungssignal eine über einen vorgegebenen Toleranzbereich hinausgehende Abweichung von der Vergleichsinformation (Fingerabdruck) aufweist.

Das Vergleichsergebnis wird nun beispielsweise einer Steuerungseinrichtung (wie z.B. einem Mikrocontroller) übermittelt, die im Falle einer erfassten zumindest versuchten Manipulation des elektronischen Moduls geeignete, vorprogrammierte "Gegenmaßnahmen" bzw. Schutzvorkehrungen treffen kann, die einen Zugriff auf die funktionsfähige integrierte Schaltungsanordnung des elektronischen Moduls bzw. darin gespeicherte relevante Daten verhindern kann.

So kann gemäß einem Ausführungsbeispiel die Steuerungseinrichtung bei einem erfassten Manipulationsereignis eine Hilfsschaltungsanordnung (z.B. in Form einer Selbstzerstörungsschaltung), die beispielsweise einen Spannungsregler aufweisen kann, aktivieren, wobei bei einem Einschalten des Spannungsreglers ausreichend hohe Spannungen an die Schaltungselemente bzw. systemrelevanten Schaltungselemente der integrierten Schaltungsanordnung angelegt werden, um spezifische (systemrelevante) oder möglichst alle Systemkomponenten der integrierten Schaltungsanordnung, die sensitive Informationen enthalten, zu zerstören oder zumindest ausreichend stark zu beschädigen, so dass keine sensitiven Informationen ausgelesen bzw. abgeleitet werden können. Somit kann verhindert werden, dass der potentielle Eindringling ("Intruder") etwaig relevante Daten bzw. Systeminformationen gewinnen kann.

Somit kann ein elektronisches Modul, das beispielsweise als eine Chip-eingebettete Systemintegrationsplattform bezeichnet werden kann, einen Manipulationsschutz (Anti-Tamper-Eigenschaften) aufweisen. So kann das elektronische Modul bzw. die Plattform autonom einen Eindringversuch erfassen und die System-Chips bzw. die darin gespeicherten bzw. Informationen ausreichend stark beschädigen bzw. zerstören, um deren Auslesen verhindern zu können.

Bevorzugte Ausführungsbeispiele der vorliegenden Erfindung werden nachfolgend unter Bezugnahme auf die beiliegenden Zeichnungen näher erläutert. Es zeigen:

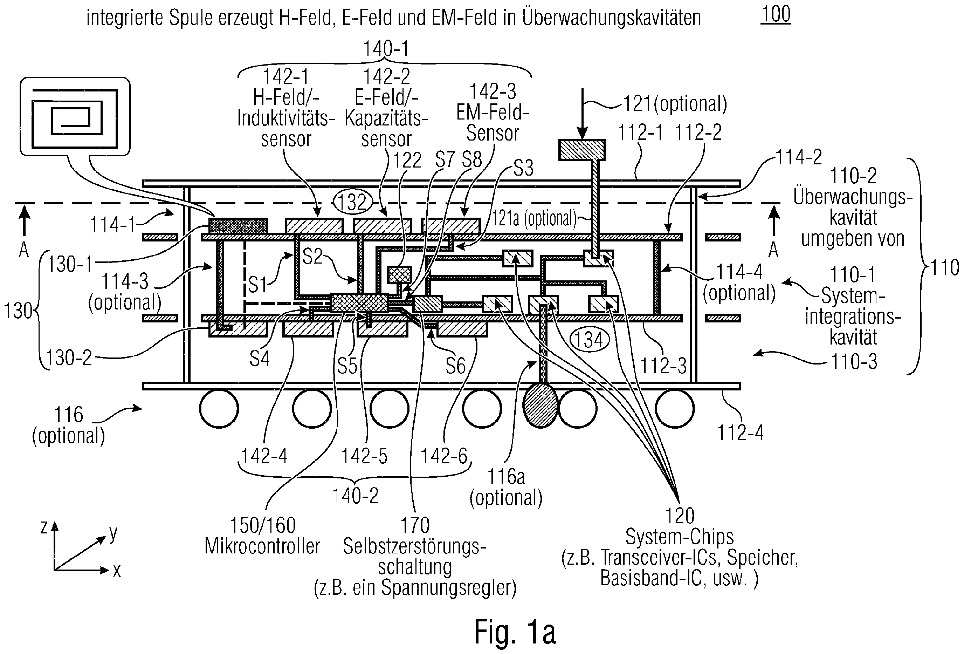

- Fig. 1a: eine schematische Seitenansicht eines Querschnitts eines elektronischen Moduls zum Bereitstellen einer elektronischen Funktionalität mit Manipulationsschutz gemäß einem Ausführungsbeispiel; und

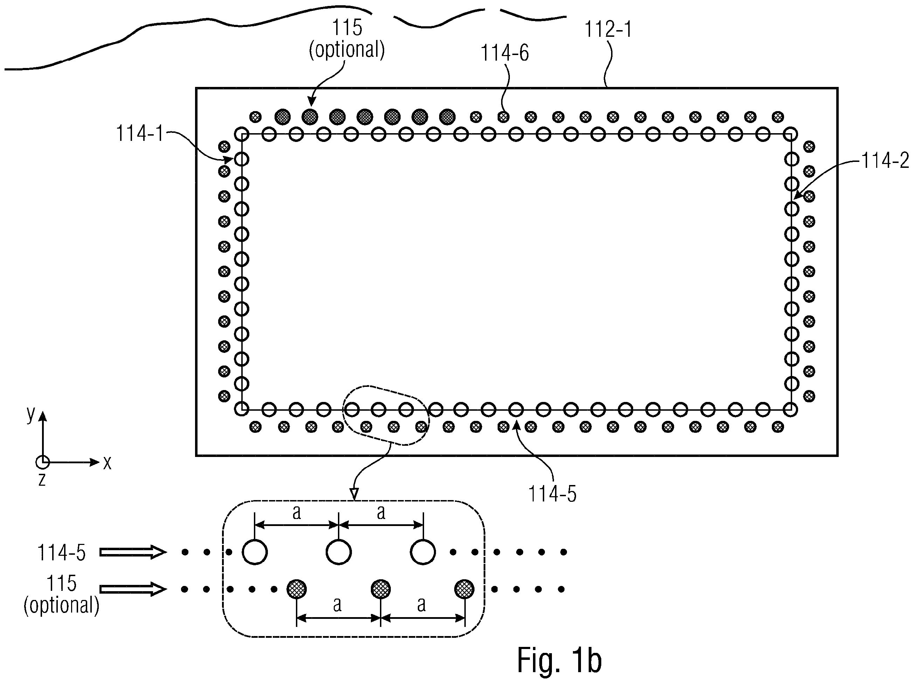

- Fig. 1b: eine schematische Draufsicht eines Querschnitts eines elektronischen Moduls zum Bereitstellen einer elektronischen Funktionalität mit Manipulationsschutz gemäß einem Ausführungsbeispiel.

Bevor nachfolgend Ausführungsbeispiele der vorliegenden Erfindung im Detail anhand der Zeichnungen näher erläutert werden, wird darauf hingewiesen, dass identische, funktionsgleiche oder gleichwirkende Elemente, Objekte, Funktionsblöcke und/oder Verfahrensschritte in den unterschiedlichen Figuren mit den gleichen Bezugszeichen versehen sind, so dass die in unterschiedlichen Ausführungsbeispielen dargestellte Beschreibung dieser Elemente, Objekte, Funktionsblöcke und/oder Verfahrensschritte untereinander austauschbar ist bzw. aufeinander angewendet werden kann.

Fig. 1a zeigt nun in einer schematischen Querschnittsansicht ein elektronisches Modul 100 zum Bereitstellen einer elektronischen Funktionalität, das eine erhöhte Sicherheit vor Datenmissbrauch und Produktmanipulation ("Tampering") bietet.

Das elektronische Modul 100 weist ein Gehäuse 110 mit einem ersten, zweiten und dritten Gehäuseabschnitt 110-1, 110-2, 110-3 auf, wobei der erste Gehäuseabschnitt 110-1 zwischen dem zweiten und dritten Gehäuseabschnitt 110-2, 110-3 angeordnet ist. Der erste, zweite und dritte Gehäuseabschnitt 110-1, 110-2, 110-3 weisen jeweils leitfähige Wandbereiche 112-n, 114-n (112-1 ... -4, und 114-1 ... -4) auf.

Das elektronische Modul 100 weist ferner eine integrierte Schaltungsanordnung 120 auf, die zum Bereitstellen der elektronischen Funktionalität des elektronischen Moduls 100 vorgesehen ist. Die integrierte Schaltungsanordnung 120 ist in bzw. an den ersten Gehäuseabschnitt 110-1 angeordnet. Ferner kann eine leitungsgebundene oder auch drahtlose Kontaktstruktur an dem Gehäuse 110 vorgesehen sein, um eine kontrollierte Kommunikation (z.B. einen kontrollierten Datenaustausch) der integrierten Schaltungsanordnung 120 mit der Außenwelt bzw. einem externen Gerät (nicht gezeigt in Fig. 1) zu ermöglichen. In Fig. 1a ist rein beispielhaft ein sog. Ball-Grid-Array (BGA) als leitungsgebundene Kontaktstruktur 116 dargestellt, wobei die leitungsgebundene Kontaktstruktur 116 über ein Verbindungselement 116a, das z.B. als eine Leiterbahn und/oder eine Durchführung (Via) ausgebildet ist, mit der integrierten Schaltungsanordnung 120 elektrisch verbunden ist. In Fig. 1a ist ferner rein beispielhaft eine weitere (optionale) Systemkomponente 121 dargestellt, die über ein Verbindungselement 121a, das z.B. als eine Leiterbahn und/oder eine Durchführung (Via) ausgebildet ist, mit der integrierten Schaltungsanordnung 120 elektrisch verbunden sein kann. Die Systemkomponente 121 (wie z.B. eine Antenne zur drahtlosen Kommunikation, ein Sensor, etc.) kann auch vorgesehen sein, um mit einem externen Gerät (nicht gezeigt in Fig. 1) zu kommunizieren oder zu interagieren.

Das elektronische Modul 100 weist ferner eine Überwachungsfeld-Erzeugungsanordnung 130 (z.B. mit jeweils einer Überwachungsfeld-Erzeugungsteilanordnung 130-1 bzw. 130-2 in dem zweiten und dritten Gehäuseabschnitt 110-2, 110-3) zum Erzeugen eines Überwachungsfelds 132, 134 in dem zweiten und dem dritten Gehäuseabschnitt 110-2, 110-3 auf. Die Überwachungsfeld-Erzeugungsanordnung 130 ist ausgebildet, um beispielsweise eine magnetische, elektrische, elektromagnetische, optische und/oder Überwachungsfeldkomponente im Ultraschallbereich in dem zweiten und dritten Gehäuseabschnitt 110-2, 110-3 zu erzeugen. Beispielsweise kann die Überwachungsfeld-Erzeugungsanordnung 130 ein Überwachungsfeld 132, 134 mit einer Kombination der genannten möglichen Überwachungsfeldkomponenten in dem zweiten und dritten Gehäuseabschnitt 110-2, 110-3 erzeugen. So kann die Überwachungsfeld-Erzeugungsanordnung 130 ausgebildet sein, um zumindest zwei, zumindest drei oder zumindest vier der vorhergehend genannten Überwachungsfeldkomponenten in dem zweiten und dritten Gehäuseabschnitt 110-2, 110-3 zu erzeugen.

Das elektronische Modul weist ferner eine Überwachungsfeld-Erfassungsanordnung 140 z.B. mit einer ersten Überwachungsfeld-Erfassungsteilanordnung 140-1 in dem zweiten Gehäuseabschnitt 110-2 und mit einer zweiten Überwachungsfeld-Erfassungsteilanordnung 140-2 in dem dritten Gehäuseabschnitt 110-3, zum Erfassen von Feldkomponenten bzw. Intensitäten des Überwachungsfelds 130 an einer Mehrzahl von Messpositionen in dem zweiten Gehäuseabschnitt 110-2 und dem dritten Gehäuseabschnitt 110-3 auf. Die Überwachungsfeld-Erfassungsteilanordnungen 140-1, 140-2 können jeweils wieder unterschiedliche Erfassungselemente oder Sensorelemente 142-1 ... 142-6 (142-n) aufweisen, um die (unterschiedlichen) Feldkomponenten des Überwachungsfelds 132, 134 in dem zweiten und dem dritten Gehäuseabschnitt 110-2, 110-3 zu erfassen. Ferner ist die Überwachungsfeld-Erfassungsanordnung 140 ausgebildet, um mindestens ein Überwachungssignal (oder eine davon abgeleitete Größe) oder eine Überwachungsinformation S1, S2, ..., S6 (SN) basierend auf den erfassten Intensitäten des Überwachungsfelds 132, 134 bzw. der unterschiedlichen Komponenten des Überwachungsfelds 132, 134 bereitzustellen. So können die unterschiedlichen Erfassungselemente oder Sensorelemente 142-1, ..., 142-6 (142-n) eigene Überwachungssignale (oder eine davon abgeleitete Größen) oder Überwachungsinformationen S1, S2, ..., S6 (SN) bzw. beliebige Kombinationen der Signale oder Informationen S1, ..., S6 bereitstellen.

Das elektronische Modul 100 weist ferner eine Auswerteeinrichtung 150 auf, die vorgesehen ist, um das Überwachungssignal SN mit einer gespeicherten Vergleichsinformation S7 zu vergleichen, um ein Vergleichsergebnis S8 zu erhalten, das dann auf eine (versuchte) Manipulation des elektronischen Moduls 100 hinweist, wenn die Überwachungsinformation SN eine über einen vorgegebenen Toleranzbereich hinausgehende Abweichung ΔS von dem Vergleichsinformation S7 aufweist. Die Vergleichsinformation S2 kann z.B. in dem "sicheren" nicht-flüchtigen Speicher 122 der integrierten Schaltungsanordnung 120 abgelegt sein, der z.B. nur von der Auswerteeinrichtung 150 auslesbar bzw. zugreifbar ist.

Das Vergleichsergebnis S8 gibt also an, ob sich das elektronische Modul 100 in einem normalen Betriebsmodus befindet oder ob eine (versuchte) Manipulation des elektronischen Moduls 100 vorliegt. Basierend auf dem Vergleichsergebnis S8 können somit etwaige Gegenmaßnahmen, z.B. von einer Steuerungseinrichtung 160, für eine erhöhte Sicherheit vor einem Datenmissbrauch und einer Produktmanipulation (Tampering) eingeleitet bzw. getroffen werden.

Wie die nachfolgenden Ausführungen zeigen werden, kann das elektronische Modul 100 ein beliebiges, in einem Gehäuse untergebrachtes elektronisches und/oder elektrisches Gerät, Bauteil oder Baugruppe sein. Das elektronische Modul 100 kann beispielsweise ein Handy (Smartphone), ein Notebook bzw. Laptop, ein gehäuster integrierter Schaltkreis, z.B. ein gehäuster Mikroprozessor, ein PC, ein beliebiges Gerät der Unterhaltungselektronik, wie z.B. ein Fernseher, DVD-Player etc., oder eine gehäuste Baugruppe oder Schaltungsplatine eines dieser Geräte bzw. Elemente sein.

Dabei kann ein Außengehäuse (nicht gezeigt in Fig. 1a) des elektronischen Moduls 100 auch zumindest einen Teil eines oder mehrerer der Gehäuseabschnitte 110-1, 110-2, 110-3 des in Fig. 1a dargestellten Gehäuses 110 bilden.

Wie in Fig. 1a ferner dargestellt ist, kann der erste Gehäuseabschnitt 110-1 zwischenliegend bzw. eingebettet zwischen dem zweiten und dritten Gehäuseabschnitt 110-2, 110-3 angeordnet sein, wobei der erste Gehäuseabschnitt 110-1 auch nur bereichsweise oder aber auch vollständig zwischen dem zweiten und dritten Gehäuseabschnitt 110-2, 110-3 angeordnet bzw. eingebettet sein kann. Diese Anordnung stellt sicher, dass ein (unberechtigter) Zugriffsversuch auf den ersten Gehäuseabschnitt 110-1 mit der integrierten Schaltungsanordnung 120 nur stattfinden kann, wenn auch ein Eingriff bzw. Eindringen in den zweiten und dritten Gehäuseabschnitt 110-2, 110-3 stattfindet. In diesem Zusammenhang wird darauf hingewiesen, dass natürlich noch weitere zusätzliche Gehäuseabschnitte (nicht gezeigt in Fig. 1a) vorgesehen sein können, die, wie im Nachfolgenden beschrieben, entsprechend dem zweiten und dritten Gehäuseabschnitt 110-2, 110-3 ausgebildet sind, und parallel oder auch vertikal zu dem zweiten und dritten Gehäuseabschnitt 110-2, 110-3 um den ersten Gehäuseabschnitt 110-1 herum (bzw. daran angrenzend) geordnet sein können, um einen unberechtigten Zugriff bzw. ein unberechtigtes Eindringen in den ersten Gehäuseabschnitt 110-1 mit der integrierten Schaltungsanordnung 120 weiter zu erschweren. Es ist auch möglich, einen Stapel (nicht gezeigt in Fig. 1a) von (übereinander angeordneten) Überwachungskavitäten an einem oder mehreren Seitenabschnitten der Systemkavität 110-1 anzuordnen.

Wie in Fig. 1a beispielhaft dargestellt ist, kann der erste Gehäuseabschnitt 110-1 des Gehäuses 110 als die sogenannte "System-Integrationskavität" mit der darin angeordneten integrierten Schaltungsanordnung 120 ausgebildet sein. Die System-Integrationskavität 110-1 kann beispielsweise einen Aufbau mit einer oder mehreren aufeinander bzw. aneinander angeordneten dielektrischen und metallischen Schichten aufweisen, wobei die System-Chips (ICs) oder weitere Systemkomponenten in dieser System-Integrationskavität eingebettet sind. Die System-Chips können beispielsweise Transceiver-ICs, Speicherbausteine, Basisband-ICs (allgemein jegliche Halbleiterschaltungsanordnungen), Mikroprozessoren, Mikrocontroller etc. aufweisen. Zumindest ein Teil der Halbleiterschaltungsanordnung der integrierten Schaltungsanordnung 120 ist vorgesehen, um die elektronische Funktionalität des elektronischen Moduls 110 (entsprechend der jeweiligen Ausgestaltung und des Anwendungsgebiets des elektronischen Moduls 100) bereitzustellen.

Da der erste Gehäuseabschnitt 110-1 zumindest bereichsweise (oder auch vollständig) zwischen dem zweiten und dritten Gehäuseabschnitt 110-2, 110-3 angeordnet und eingebettet ist, bilden der zweite und dritte Gehäuseabschnitt 110-2, 110-3 (oder optional weitere daran angrenzend angeordnete Gehäuseabschnitte - nicht gezeigt in Fig. 1a) sogenannte Überwachungskavitäten angrenzend bzw. benachbart zu dem ersten Gehäuseabschnitt 110-1 mit der zu schützende integrierten Schaltungsanordnung 120. Das elektronische Modul 110 weist somit eine Mehrzahl von Überwachungskavitäten 110-2, 110-3 an der Oberseite und Unterseite (bzgl. der Ansicht von Fig. 1a) des ersten Gehäuseabschnitts 110-1 mit der integrierten Schaltungsanordnung 102 auf. Die integrierte Schaltungsanordnung 120 kann somit als in einer vergrabenen Kavität (System-Integrationskavität) 110-1 angeordnet angesehen werden, die zwischen die Überwachungskavitäten 110-2, 110-3 eingebettet ist.

Die im Nachfolgenden noch näher erläuterte Überwachungsfeld-Erzeugungsanordnung 130 ist nun ausgebildet, um ein Überwachungsfeld 132, 134, das eine oder mehrere unterschiedliche Überwachungsfeldkomponenten aufweist, in dem zweiten und dritten Gehäuseabschnitt 110-2, 110-3 zu erzeugen. Um nun mittels der Überwachungsfeld-Erzeugungsanordnung(en) 130 eine reproduzierbare Feldverteilung der jeweiligen Feldkomponente bzw. Feldkomponenten des Überwachungsfelds mit (stabil) reproduzierbaren Intensitäten in den Überwachungskavitäten 110-2, 110-3 (d. h. dem zweiten und dritten Gehäuseabschnitt) zu erhalten, sind die Wandbereiche der Überwachungskavitäten 110-2, 110-3 zumindest bereichsweise elektrisch leitfähig ausgebildet.

Zur Erleichterung der Beschreibung der Ausbildung der Wandbereiche der Gehäuseabschnitte 110-1, 110-2, 110-3 ist in Fig. 1a beispielhaft ein orthogonales x-y-z-Koordinatensystem dargestellt, um die Ebenen bzw. Flächen einfacher definieren und beschreiben zu können, in denen die Metallisierungsbereiche angeordnet sind. In diesem Zusammenhang wird aber ferner darauf hingewiesen, dass eine orthogonale Anordnung der Metallisierungsbereiche lediglich zur Vereinfachung der Darstellung in Fig. 1a gewählt ist, wobei gemäß dem erfindungsgemäßen Konzept jegliche Ausrichtung der Seitenwandbereiche der Gehäuseabschnitte gewählt werden können, z.B. angewinkelt, abgerundet, kreisförmig, elliptisch, entlang eines Polygons etc., solange die im Rahmen der vorliegenden Erfindung beschriebene Funktionalität der unterschiedlichen Gehäuseabschnitte zur Erzeugung und zum Auslesen des Überwachungsfelds erhalten werden kann.

Wie in Fig. 1a dargestellt ist, können eine Mehrzahl von leitfähigen Wandbereichen 112-1 ...112-4 als horizontale Metallisierungen, z.B. einer mehrlagigen Leiterplatte, parallel zur x-y-Ebene von Fig. 1a ausgebildet sein, während ferner vertikal ausgerichtete, leitfähige Wandbereiche 114-1 ... 114-4 parallel zur y-z-Ebene von Fig. 1a angeordnet sein können. Die vertikalen Metallisierungen bzw. Metallisierungsbereiche können beispielsweise durch mit einer Metallisierung versehene Durchführungen (Vias) ausgebildet sein, die eine Art "Vorhang" 114-1, 114-2 (in der y-z-Ebene und der x-z-Ebene in der Fig. 1a) bilden können. Dieser Via-Vorhang kann somit die seitliche (vertikale) Begrenzung des Gehäuses 110 bilden, während die leitfähigen Wandbereiche 112-1 und 112-2 die horizontalen Begrenzungen des zweiten Gehäuseabschnitts 110-2 bilden, und die leitfähigen Wandbereiche 112-3 und 112-4 die horizontalen Begrenzungen des dritten Gehäuseabschnitts 110-3 bilden.

In Fig. 1b ist ferner eine schematische Schnittansicht AA in der x-y-Ebene der Fig. 1a zwischen den horizontal angeordneten, leitfähigen Wandbereichen 112-1, 112-2 dargestellt, um die mögliche Ausbildung als Via-Vorhang der vertikal angeordneten, leitfähigen Wandbereiche 114-1, 114-2 und 114-5, 114-6 (nur in Fig. 1b dargestellt) zu verdeutlichen. In diesem Zusammenhang wird wieder darauf hingewiesen, dass die Ausgestaltung der leitfähigen Wandbereiche 114-1, 114-2, 114-5, 114-6 lediglich als beispielhaft anzusehen ist, da entsprechend auch durchgehende Metallisierungen als die vertikal verlaufenden, leitfähigen Wandbereiche 114-1, 114-2, 114-5, 114-6 verwendet werden können.

Die leitfähigen Wandbereiche 114-1, 114-2, 114-5, 114-6 erfüllen somit eine elektrische als auch (optional) eine mechanische Funktionalität, um kontinuierlich geschlossene Seitenwände zu erhalten des Gehäuses 110, so dass der erste, zweite und dritte Gehäuseabschnitt 110-1, 110-2, 110-3 ausgebildet sind.

In Fig. 1b sind ferner weitere optionale Wandbereiche 115 eingezeichnet (nicht gezeigt in Fig. 1a), um zu verdeutlichen, dass die vertikal angeordneten, leitfähigen Wandbereiche 114-1, 114-2 und 114-5, 114-6 aus mehreren Lagen bzw. Ebenen von Via-Vorhängen (Via-Zäunen) ausgebildet sein können, die vertikal zu der x-y-Ebene in Fig. 1b angeordnet sind. Der Via-Vorhang bzw. Via-Zaun kann somit aus mehr als einer Reihe von Vias gebildet sein, die beispielsweise (in der x-Richtung und Y-Richtung) in einer "gestapelten" Art und Weise angeordnet sein können. So können beispielsweise die Vias des Via-Vorhangs 115 versetzt zu den Vias der Wandbereiche 114-1, 114-2, 114-5, und 114-6 angeordnet sein. In einer vergrößerten Detailansicht in Fig. 1b sind nun einige Vias des Wandbereichs 114-5 mit einem Abstand "a" dargestellt, wobei die Vias des Wandbereichs 115 wiederum entsprechend beispielsweise mit dem Abstand "a" versetzt oder auch zentriert (mittig) zu den Vias der Wandbereiche 114-1, 114-2, 114-5, 114-6 angeordnet sein können. Darüber hinaus sind weitere als Via-Vorhang ausgebildete Wandbereiche (nicht gezeigt in Fig. 1b) denkbar, um somit einen mehrreihigen (zwei-, drei,- vier-, etc. - reihigen) Via-Vorhang als horizontale Begrenzung (als Gehäuseabschnitt) des elektronischen Moduls 100 zu bilden.

Wie in Fig. 1a ferner dargestellt ist, können die leitfähigen Wandbereiche 114-1 und 114-2 (galvanisch bzw. elektrisch) getrennt zu den Wandbereichen 112-2, 112-3 bzw. 114-3, 114-4 ausgebildet sein, so dass unterschiedliche Potentiale an diese Wandbereiche anlegbar sind, um ein (reproduzierbares) elektrisches Überwachungsfeld 132, 134 in dem zweiten und dritten Gehäuseabschnitt 110-2, 110-3 erzeugen zu können. Im Allgemeinen können also gegenüberliegend und/oder benachbart angeordnete leitfähige Wandbereiche des zweiten und dritten Gehäuseabschnitts 110-2, 110-3 elektrisch getrennt (aber kapazitiv gekoppelt) ausgebildet sein, um mittels unterschiedlicher daran angelegter Potentiale ein elektrisches Überwachungsfeld bzw. eine Feldkomponente des Überwachungsfelds jeweils in dem zweiten und dritten Gehäuseabschnitt 110-2, 110-3 zu erzeugen. Da der zweite und dritte Gehäuseabschnitt 110-2, 110-3 jeweils als Seitenwände leitfähige Wandbereiche aufweisen, können die Überwachungskavitäten 110-2, 110-3 beispielsweise jeweils als ein sogenannter Faradayscher Käfig ausgebildet sein.

Ferner kann das verbleibende Innenvolumen des ersten, zweiten und dritten Gehäuseabschnitts 110-1, 110-2, 110-3 mit einem Dielektrikum, wie z.B. einem Epoxidharz, Luft, etc. gefüllt sein. Ferner können die Abmessungen der Metallisierungsbereiche bzw. die Abmessungen der Vias (Durchmesser sowie Abstände) so dimensioniert werden, so dass eine Abstrahlung des Überwachungsfelds 132, 134 nach außen bzw. eine (störende) Einkopplung von externen Feldern nach innen verhindert bzw. zumindest reduziert werden kann.

Zusammenfassend kann also festgestellt werden, dass die leitfähigen Wandbereiche 112-n, 114-n sowohl als horizontale Metallisierungsschichten 112-1 .... -4 als auch als vertikale metallisierte Reihen von Vias (metallisierte Durchführungen) 114-1 ...114-4 ausgebildet sein können, um kontinuierlich metallisierte Seitenwandbereiche des zweiten und dritten Gehäuseabschnitts 110-2, 110-3 (Überwachungskavitäten) zu bilden. Beispielsweise können der zweite und der dritte Gehäuseabschnitt 110-2, 110-3 jeweils als ein Faradayscher Käfig ausgebildet sein.

Wie in Fig. 1a dargestellt, ist eine Überwachungsfeld-Erzeugungsanordnung 130 vorgesehen, um ein Überwachungsfeld 132, 134 in dem zweiten und dritten Gehäuseabschnitt 110-2, 110-3 oder in optionalen weiteren vorgesehenen Gehäuseabschnitten bzw. Überwachungskavitäten (nicht gezeigt in Fig. 1a) zu erzeugen. Die Überwachungsfeld-Erzeugungsanordnung 130 kann eine Antennenstruktur und/oder eine integrierte Spule aufweisen oder kann zusätzlich oder alternativ durch kapazitiv gekoppelte leitfähige Wandbereiche des jeweiligen Gehäuseabschnitts ausgebildet sein. Um beispielsweise ein Überwachungsfeld 132, 134 mit einer magnetischen, elektrischen und/oder elektromagnetischen Feldkomponente zu erzeugen, kann beispielsweise eine integrierte Spule 130-1 in dem zweiten Gehäuseabschnitt 110-2 und eine weitere integrierte Spule 130-2 in dem dritten Gehäuseabschnitt 110-3 angeordnet sein.

Gemäß dem vorliegenden Konzept kann die Überwachungsfeld-Erzeugungsanordnung 130 jeweils ein Felderzeugungselement 130-1, 130-2 in dem zweiten bzw. dritten Gehäuseabschnitt 110-2, 110-3 aufweisen, wobei ferner in den jeweiligen Gehäuseabschnitten 110-2, 110-3 auch eine Mehrzahl (zumindest zwei) Überwachungsfeld-Erzeugungselemente, die auch unterschiedliche Überwachungsfeldkomponenten erzeugen können, angeordnet sein kann. Je nach gewünschter Überwachungsfeldkomponente (z.B. ein Magnetfeld, ein elektrisches Feld, ein elektromagnetisches Feld etc.) kann jeweils ein oder eine Mehrzahl von Abstrahlelementen 130-1, 130-2 zum Erzeugen der jeweiligen Überwachungsfeldkomponente 132, 134 in den verschiedenen Gehäuseabschnitten (Überwachungskavitäten) vorgesehen sein. Die Überwachungsfeld-Erfassungsvorrichtung 130 kann beispielsweise eine oder mehrere (integrierte) Spulen aufweisen, die in die Überwachungskavitäten 110-2, 110-3 (bzw. in weitere Überwachungskavitäten - nicht gezeigt in Fig. 1a) integriert sind. Wenn ein Anregungssignal, wie z.B. ein Strom, in diese Spule(n) eingeprägt wird, wird dadurch abhängig von der Art und der Frequenz des eingeprägten Signals, z.B. eines Gleich- oder Wechselsignals, eine magnetische (H), eine elektrische (E) und/oder eine elektromagnetische (EM) Feldkomponente in der zugehörigen Überwachungskavität 110-2, 110-3 erzeugt. Aufgrund der Ausgestaltung des zweiten und dritten Gehäuseabschnitts 110-2, 110-3 als Überwachungskavitäten sind diese Feldkomponenten innerhalb der jeweiligen Gehäuseabschnitte 110-2, 110-3 i.W. eingeschlossen bzw. gefangen.

Mit einer integrierten Spule oder mehreren integrierten Spulen als Abstrahlelement 130-1, 130-2, die auch unabhängig voneinander angesteuert werden können, können gezielt H-Feldkomponenten, E-Feldkomponenten und EM-Feldkomponenten einzeln oder in Kombination als Überwachungsfeldkomponenten in den Überwachungskavitäten erzeugt werden. Basierend auf einem eingeprägten Gleichstrom, wird beispielsweise durch eine Spulenanordnung ein statisches Magnetfeld erzeugt, während ein Wechselstrom (abhängig von der Frequenz des eingeprägten Wechselsignals), ein wechselndes Magnetfeld bzw. ein elektromagnetisches Feld erzeugt. Um eine Überwachungsfeldkomponente basierend auf einem (statischen oder alternierenden) elektrischen Feld zu erzeugen, können auch elektrisch bzw. galvanisch getrennte leitfähige Wandbereiche, z. B die Wandbereiche 112-1 und 112-2 und die Wandbereiche 112-3 und 112-4 auf unterschiedlichen Potentialen liegen, so dass sich eine elektrische (E-) Feldkomponente als Überwachungsfeldkomponente (aufgrund der kapazitiven Kopplung der beteiligten metallisierten Seitenwände) in den Überwachungskavitäten 110-2, 110-3 ausbildet. Als Feldkomponenten des Überwachungsfelds 132, 134 können sowohl einzelne Feldkomponenten (z.B. eine H-Komponente, E-Komponente, EM-Komponente) als auch Kombinationen aus (verschiedenen) Feldkomponenten oder Feldkomponenten mit unterschiedlichen Frequenzen erzeugt und eingesetzt werden.

Wie in Fig. 1a dargestellt ist, ist die Überwachungsfeld-Erfassungsanordnung 140 mit den Erfassungsteilanordnungen 140-1 des zweiten Gehäuseabschnitts 110-2 und mit der Erfassungsteilanordnung 140-2 des dritten Gehäuseabschnitts 110-3 so angeordnet, um Intensitäten (Feldkomponenten) des Überwachungsfelds an einer Mehrzahl von Messpositionen in dem zweiten Gehäuseabschnitt 110-2 und dem dritten Gehäuseabschnitt 110-3 zu erfassen. Ferner ist die Überwachungsfeld-Erfassungsanordnung 140 bzw. die Erfassungsteilanordnungen 140-1, 140-2 ausgebildet, um basierend auf den erfassten Intensitäten (Feldkomponenten des Überwachungsfelds) ein Überwachungssignal bzw. eine Überwachungsinformation SN an die Auswerteeinrichtung 150 bereitzustellen.

Als "Gegenstück" zu der Überwachungsfeld-Erzeugungsanordnung 130 weist die Überwachungsfeld-Erfassungsanordnung 140 (entsprechend den erzeugten Überwachungsfeldkomponenten) z.B. eine Mehrzahl von induktiven Sensoren zur Erfassung einer Magnetfeldkomponente, eine Mehrzahl von kapazitiven Sensoren zur Erfassung einer elektrischen Feldkomponente und/oder eine Mehrzahl von Antennen zum Erfassen einer elektromagnetischen Feldkomponente auf. Die Sensorelemente 142-n der Überwachungsfeld-Erfassungsanordnung 140 können in dem zweiten Gehäuseabschnitt 110-2 und in dem dritten Gehäuseabschnitt 110-3 (statistisch oder auch gleichmäßig) verteilt angeordnet sein, um die jeweiligen Feldintensitäten bzw. Überwachungsfeldkomponenten an unterschiedlichen Positionen zu erfassen.

Die Überwachungsfeld-Erfassungsanordnung 140 kann somit zur Erfassung des Überwachungsfelds 132, 134 bzw. der unterschiedlichen Feldkomponenten des Überwachungsfelds zumindest eine Kombination aus zwei oder aus zumindest drei unterschiedlichen Sensorarten aufweisen, um unterschiedliche Feldkomponenten des Überwachungsfelds zu erfassen. Um beispielsweise eine Magnetfeldkomponente zu erfassen, kann ein Magnetfeldsensor (induktiver Sensor), wie z.B. Hall-Sensorelemente, GMR-Sensorelemente, integrierte Spulen etc. eingesetzt werden. Zur Erfassung einer elektrischen Feldkomponente des Überwachungsfelds können beispielsweise kapazitive Sensoren (Kondensatoren) eingesetzt werden. Zur Erfassung einer elektromagnetischen Feldkomponente des Überwachungsfelds können für den jeweiligen Frequenzbereich abgestimmte Antennen eingesetzt werden. Als eine elektromagnetische Feldkomponente des Überwachungsfelds können auch optische Strahlungsanteile, Ultraschallsignale, ER-Anteile, UV-Anteile etc. angesehen werden, wobei dann entsprechende für diesen Frequenzbereich der elektromagnetischen Strahlung empfindliche Sensorelemente für die Überwachungsfeld-Erfassungsanordnung 140 eingesetzt werden können.

Die einzelnen Sensoren zur Erfassung der (unterschiedlichen) Feldkomponenten des Überwachungsfelds können verteilt in den zu überwachenden Gehäuseabschnitt 110-2, 110-3 (bzw. in etwaig weiteren, in Fig. 1a nicht gezeigten zu überwachenden Gehäuseabschnitten) verteilt angeordnet sein.

Die Sensoren in den Überwachungskavitäten 110-2, 110-3 erfassen somit die jeweilige Intensität (am Ort des Sensors) der (unterschiedlichen) erzeugten Feldkomponenten des Überwachungsfelds und geben diese erfassenden Intensitäten oder davon abgeleitete Größen als Überwachungssignal bzw. Überwachungsinformation SN an die Auswerteeinrichtung 150, die beispielsweise Teil der Steuerungseinrichtung 160 ist, weiter.

Diese Überwachungsfeldsensoren 142-n können als integrierte Schaltungen (ICs) oder integrierte Strukturen, wie z.B. integrierte Spulen, Kondensatoren, Antennen usw., ausgebildet werden, die die jeweiligen Feldkomponenten bzw. Feldintensitäten des Überwachungsfelds am jeweiligen Ort der angeordneten Überwachungsfeldsensoren erfassen bzw. messen.

Falls nun auf eine nicht-autorisierte Weise versucht wird, auf die integrierte Schaltungsanordnung 120 in dem ersten Gehäuseabschnitt 110-1 zuzugreifen bzw. diese zu manipulieren, d. h. falls versucht wird, in die Systemintegrationsplattform 100 einzudringen und dazu zumindest ein Gehäuseabschnitt der Gehäuseabschnitte 110-2 oder 110-3 geöffnet oder manipuliert wird, ändern sich die in den jeweiligen "angegriffenen" Gehäuseabschnitt (Überwachungskavität) vorhandenen Überwachungsfeldkomponenten, d. h. die elektrischen Feldkomponenten, Magnetfeldkomponenten und/oder elektromagnetischen Feldkomponenten bzw. Intensitäten, gegenüber deren "originalen" (ursprünglichen) Intensitätswerten. Die Überwachungsfeldsensoren 140-n erfassen nun die neuen Feldintensitäten bzw. Überwachungsfeldkomponenten und berichten diese neuen Feldintensitäten bzw. Überwachungsfeldkomponenten oder deren Änderungen an die Auswerteeinrichtung 150 bzw. die Steuerungseinrichtung 160. Die Verwendung mehrerer Überwachungsfeldsensoren zur Erfassung von magnetfeld-elektrischen und elektromagnetischen Feldkomponenten zur Überwachung der Kavitäten macht das Überwachungssystem sehr zuverlässig. Selbst wenn einer der Sensoren ausfällt, kann das System, d. h. das elektronische Modul 100 und insbesondere die darin angeordnete integrierten Schaltungsanordnung 120 unter Verwendung der weiteren Überwachungssensorelemente zuverlässig überwacht werden.

Die Überwachungsanordnung, d. h. die Sensorelemente und die Auswerteeinrichtung etc., können eingesetzt werden, um im Wesentlichen jegliches System bzw. jegliches ausgestaltetes elektronische Modul 100 zu überwachen.

Das von der Überwachungsfeld-Erfassungsanordnung 140 bereitgestellte Überwachungssignal (die Überwachungsinformation) SN wird nun der Auswerteeinrichtung 150 bereitgestellt. Die Auswerteeinrichtung 150, die beispielsweise als eine Vergleichseinrichtung bzw. als ein Komparator ausgebildet ist, ist nun konfiguriert, um das Überwachungssignal SN mit dem (zugriffssicher) abgespeicherten Vergleichswert S7 zu vergleichen, um ein Vergleichsergebnis bzw. Vergleichssignal S8 zu erhalten, das dann auf eine (zumindest versuchte) Manipulation des elektronischen Moduls 100 bzw. der darin angeordneten integrierten Schaltungsanordnung 120 hinweist, wenn das Überwachungssignal SN eine über einen vorgegebenen Toleranzbereich hinausgehende Abweichung von dem Vergleichssignal/Vergleichsergebnis S8 aufweist.

Da das erhaltene Überwachungssignal SN von der Überwachungsfeld-Erfassungsanordnung 140 häufig beispielsweise aufgrund von nicht zu vermeidenden Umgebungseinflüssen, wie z.B. Temperaturänderungen, Luftdruckänderungen, Luftfeuchtigkeitsänderungen, etc., in einem gewissen Maß auch Schwankungen unterzogen sein kann, die nicht auf einen nicht-autorisierten versuchten Zugriff bzw. eine versuchte Manipulation der integrierten Schaltungsanordnung 120 des elektronischen Moduls 100 zurückzuführen sind, kann ein gewisser Toleranzbereich für den Vergleich der Überwachungsinformation SN mit der abgespeicherten Vergleichsinformation S7 (Fingerabdruck bzw. Fingerprint) vorgesehen werden, um einerseits weiterhin zuverlässig einen Eindringversuch erkennen zu können aber auch zuverlässig die Auslösung eines Fehlalarms verhindern zu können. Darüber hinaus ist aber der Toleranzbereich ausreichend niedrig zu wählen, um nicht einen tatsächlichen Angriff auf das elektronische Modul 100 bzw. die darin angeordnete integrierte Schaltungsanordnung 120 zu "übersehen". Der Toleranzbereich ist somit entsprechend dem jeweiligen Einsatzgebiet und der tatsächlichen Ausgestaltung des elektronischen Moduls 100 einzustellen.

Die Einstellung des Toleranzbereichs ist über eine entsprechende "Programmierung" der Auswerteeinrichtung 150 relativ einfach umsetzbar und an die jeweiligen praktischen Bedingungen bzw. Einsatzbedingungen und Einsatzgebiete des elektronischen Moduls 100 anpassbar. Dabei ist, wie oben bereits angegeben, dahin gehend eine Abwägung zu treffen, dass einerseits ein tatsächlich versuchter Angriff auf das elektronische Modul 100 bzw. die darin angeordnete integrierte Schaltungsanordnung 120 zuverlässig erkannt wird, aber entsprechend zuverlässig auch ein "Fehlalarm" und die damit verbundenen (drastischen) Auswirkungen für das elektronische Modul 100 verhindert werden.

Deshalb wird erfindungsgemäß ein sogenannter "Toleranzbereich" für den Vergleichsvorgang der Auswerteeinrichtung eingeführt, damit berücksichtigt werden kann, dass das Überwachungssignal z.B. gewissen Umwelteinflüssen ausgesetzt ist. Durch geeignete "Layout-Maßnahmen" der überwachten Gehäuseabschnitte 110-2, 110-3 kann nun erreicht werden, dass dieser vorgegebene Toleranzbereich äußerst niedrig, z.B. kleiner-gleich (≤) als 10%, 5%, 1%, 0,1% des Vergleichssignals (des Vergleichssignalpegels oder der Vergleichsinformation) oder des Überwachungssignals (des Überwachungssignalpegels oder der Überwachungsinformation) eingestellt werden kann. Wird beispielsweise ein Toleranzbereich von kleiner 5% angenommen, wird erst bei einer relativen Abweichung von mehr als 5% zwischen der Überwachungsinformation SN und der hinterlegten bzw. gespeicherten Vergleichsinformation (Vergleichswert bzw. Vergleichssignal) S7 das auf eine Manipulation hinweisende Vergleichsergebnis S8 ausgegeben. Diese Vorgehensweise ist entsprechend anwendbar für Toleranzbereiche von ≤10%, ≤1%, ≤0,1% etc.

Das elektronische Modul 100 kann ferner eine Steuerungseinrichtung 160 aufweisen. Die Steuerungseinrichtung 160 ist z.B. mit der Überwachungsfeld-Erzeugungsanordnung 130 und der Überwachungsfeld-Erfassungsanordnung 140 gekoppelt und steuert diese an und liest diese aus, um das Überwachungsfeld zu erzeugen und die Feldkomponenten (Intensitäten) des Überwachungsfelds mittels der Überwachungsfeld-Erfassungsanordnung 140 zu erfassen, und um die Überwachungsinformation SN der Auswerteeinrichtung 150 bereitzustellen. Die Auswerteeinrichtung 150 kann Teil der Steuerungseinrichtung 160 sein. Die Steuerungseinrichtung 160 kann ferner ausgebildet sein, um bei einer Initialisierung des elektronischen Moduls 100 die Überwachungsfeld-Erzeugungsanordnung 130 anzusteuern, um ein initiales (anfängliches) Überwachungsfeld zu erzeugen, und kann ferner ausgebildet sein, um mittels der Überwachungsfeld-Erfassungsanordnung 140 initiale Feldkomponenten bzw. initiale Intensitäten des initialen Überwachungsfelds zu erfassen und diese erfassten Feldkomponenten oder davon abgeleitete Größen in einem z.B. nur von der Auswerteeinrichtung 150 zugreifbaren, nicht-flüchtigen Speicher als den Vergleichswert bzw. die Vergleichsinformation S7 abzuspeichern. Diese "initiale" Erfassung des Überwachungsfelds zur initialen Ermittlung der Vergleichsinformation (Fingerprint) S7 kann z.B. im Rahmen der Fertigung des Moduls, bei der ersten Inbetriebnahme des Moduls oder auch bei einem etwaigen Einbau des Moduls in eine "übergeordnete" Baugruppe erfolgen.

Die Steuerungseinrichtung 160 kann einen (spezifischen) Programmcode zur "initialen" Erfassung des Überwachungsfelds zur initialen Ermittlung der Vergleichsinformation (Fingerprint) S7 aufweisen und verwenden, um die Überwachungsfeld-Erzeugungsanordnung 130 und die Überwachungsfeld-Erfassungsanordnung 140 anzusteuern und die Vergleichsinformation S7 initial zu ermitteln und in einem nicht-flüchtigen Speicher abzuspeichern. Die Steuerungseinrichtung 160 kann nun ausgebildet sein, nach der initialen Ermittlung und Abspeicherung der Vergleichsinformation S7 den dafür verwendeten Programmcode zu löschen, um diesbezügliche Manipulationsmöglichkeiten zu unterbinden.

Ausschließlich die Steuerungseinrichtung 160 bzw. die Auswerteeinrichtung 150 sollte in der Lage sein, die abgespeicherten Fingerabdrücke abzurufen, wenn das elektronische Modul 100 ein- bzw. ausgeschaltet wird. Um jegliche Manipulation zu verhindern, kann beispielsweise der Programmcode der Steuerungseinrichtung 160, der verwendet wird, um den initialen Fingerabdruck der Überwachungskavitäten, d. h. des zweiten und dritten Gehäuseabschnitts 110-2, 110-3, verwendet wird, automatisch gelöscht werden, nachdem der (initiale) Fingerabdruck gespeichert bzw. abgelegt worden ist.

Die Steuerungseinrichtung 160 kann also ausgebildet sein, um in einem Grundzustand bzw. Initialisierungszustand des elektronischen Moduls 100 die "originalen" Feldintensitäten bzw. Feldkomponenten zu erfassen und als "Fingerabdruck" in einem Speicherbereich der integrierten Schaltungsanordnung 120 zu speichern, der gegenüber einem externen Zugriff gesichert ist. Die Steuerungseinrichtung kann ausgebildet bzw. programmiert sein (einen Programmcode aufweisen), um die Fingerabdrücke der Überwachungskavitäten 110-2, 110-3 lediglich genau einmal zu erfassen und abzuspeichern bzw. abzulegen.

Alternativ dazu kann die Steuerungseinrichtung 160 ferner ausgebildet sein, um die Überwachungsfeld-Erzeugungsanordnung 130 und die Überwachungsfeld-Erfassungsanordnung 140 anzusteuern, um in vorgegebenen zeitlichen Abständen eine aktualisierte Vergleichsinformation zu ermitteln und diese aktualisierte Vergleichsinformation als die (jeweils gültige, neue) Vergleichsinformation S7 in dem nicht-flüchtigen Speicher abzuspeichern.

Die Steuerungseinrichtung 160 kann ferner ausgebildet sein, um die Vergleichsinformation S7 mit der aktualisierten Vergleichsinformation zu vergleichen und nur dann die aktualisierte Vergleichsinformation als die (neue) Vergleichsinformation abzuspeichern, wenn keine über einen dafür vorgegebenen Toleranzwert hinausgehende Abweichung (z.B. kleiner-gleich (≤) als 10%, 5%, 1%, 0,1%) zwischen der bisherigen Vergleichsinformation und der aktualisierten Vergleichsinformation vorliegt.

Die Steuerungseinrichtung 160 kann ferner ausgebildet sein, um die integrierte Schaltungsanordnung 120 für den Fall, dass das Vergleichsergebnis S8 der Auswerteeinrichtung 150 auf eine Manipulation des elektronischen Moduls 100 hinweist, zumindest teilweise physisch unbrauchbar zu machen und/oder in der integrierten Schaltungsanordnung gespeicherte, vorgegebene Daten zu löschen. Dazu kann die integrierte Schaltungsanordnung 120 z.B. eine Selbstzerstörungsschaltungsanordnung 170 aufweisen, die auf eine Anweisung von der Steuerungseinrichtung 160 hin die integrierte Schaltungsanordnung mit einer stark erhöhten Versorgungsspannung versorgt, um die integrierte Schaltungsanordnung 120 zumindest abschnittsweise, d.h. zumindest bestimmte sensitive Elemente, physisch zu beschädigen oder zu zerstören und/oder gespeicherte Daten in den vorgegebenen Speicherbereichen zu löschen. Die Selbstzerstörungsschaltungsanordnung 170 kann z.B. einen Spannungsregler (Ladungspumpe) zum Bereitstellen der stark erhöhten Versorgungsspannung aufweisen.

Das elektronische Modul 100 ist also unter Einbeziehung der Auswerteeinrichtung 150 bzw. der Steuerungseinrichtung 160, die beispielsweise als Mikrocontroller oder Controller ausgebildet ist, in der Lage, autonom einen Eindringversuch bzw. einen Zugriffsversuch auf die integrierte Schaltungsanordnung 120 zu erfassen und als Antwort darauf sensible Schaltungsbereiche bzw. Speicherbereiche. zu zerstören bzw. zumindest so physisch zu beschädigen, um eine Auswertung dieser Schaltungsbereiche der integrierten Schaltungsanordnung sowie der dort gespeicherten Daten zu verhindern.

Falls nun die Auswerteeinrichtung 150, die beispielsweise als Teil der Steuerungseinrichtung 160 ausgebildet ist, erkennt, dass ein Angriffsversuch auf das elektronische Modul 100 bzw. die integrierte Schaltungsanordnung 120 vorliegt, kann die Auswerteeinrichtung 150 bzw. die übergeordnete Steuerungseinrichtung 160 der Selbstzerstörungsschaltung diesen Angriffszustand signalisieren, wobei die Selbstzerstörungsschaltung beispielsweise als ein Spannungsregler ausgebildet sein kann. Dieser Spannungsregler kann nun beispielsweise ausgebildet sein, um bei einem erfassten und signalisierten Angriffsversuch (Manipulationsversuch) eine extrem hohe Spannung zu erzeugen, die im Wesentlichen alle oder vorgegebene integrierte Schaltungen der integrierten Schaltungsanordnung 120, und insbesondere alle Systemkomponenten, die sensitive Informationen enthalten, zerstört oder zumindest ausreichend beschädigt, so dass die sensitiven Informationen nicht wiedergewonnen werden können. Folglich wird der Angreifer bzw. Eindringling keinerlei relevanten Daten wiedergewinnen bzw. auslesen können.

Ein Sensorausfall, z.B. eines einzelnen Sensors aus einer Vielzahl von Sensoren 142-n, kann von einem Angriffsversuch beispielsweise folgendermaßen unterschieden werden. Die Sensoren 142-n schicken Information an die Auswerteeinrichtung 150/160 über ihren eigenen Zustand und über die vermessenen Feldkomponenten. Die Auswerteeinrichtung 150/160 wertet die Information über die vermessenen Feldkomponenten eines Sensors z.B. nur dann aus, wenn die Information über den Zustand des Sensors zeigt, dass der Sensor funktioniert.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (Micro-Controller oder unter Verwendung eines Hardware-Apparats), wie zum Beispiel einen Mikroprozessor, einen programmierbaren Computer oder einer elektronischen Schaltung durchgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software oder zumindest teilweise in Hardware oder zumindest teilweise in Software implementiert sein. Die Implementierung kann unter Verwendung eines digitalen Speichermediums, beispielsweise einer Floppy-Disk, einer DVD, einer BluRay Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinen-lesbaren Träger gespeichert ist. Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist. Der Datenträger oder das digitale Speichermedium oder das computerlesbare Medium sind typischerweise greifbar und/oder nicht flüchtig.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Elektronisches Modul (100) zum Bereitstellen einer elektronischen Funktionalität, mit folgenden Merkmalen:
einem Gehäuse (110) mit einer Systemintegrationskavität (110-1) und zwei Überwachungskavitäten (110-2, 110-3), wobei die Systemintegrationskavität (110 -1) zumindest bereichsweise zwischen den zwei Überwachungskavitäten (110-2, 110-3) angeordnet ist, und wobei die Systemintegrationskavität (110-1) und die beiden Überwachungskavitäten (110-2, 110-3) leitfähige Wandbereiche (112-n) aufweisen,
einer integrierten Schaltungsanordnung (120) zum Bereitstellen der elektronischen Funktionalität, wobei die integrierte Schaltungsanordnung (120) in der Systemintegrationskavität (110-1) angeordnet ist,
einer Überwachungsfeld-Erzeugungsanordnung (130, 130-1, 130-2) zum Erzeugen von Feldkomponenten eines Überwachungsfelds (132, 134) in den beiden Überwachungskavitäten (110-2, 110-3),
einer Überwachungsfeld-Erfassungsanordnung (140, 140-1, 140-2) zum Erfassen jeweils einer Feldkomponente des Überwachungsfelds in den beiden Überwachungskavitäten (110-2,110-3) und zum Bereitstellen eines Überwachungsinformation (SN) basierend auf der erfassten Feldkomponente des Überwachungsfelds, und
einer Auswerteeinrichtung (150) zum Vergleichen der Überwachungsinformation (SN) mit einer gespeicherten Vergleichsinformation (S7), um ein Vergleichsergebnis (S8) zu erhalten, das dann auf eine Manipulation des elektronischen Moduls hinweist, wenn die Überwachungsinformation (SN) eine über einen vorgegebenen Toleranzbereich hinausgehende Abweichung (ΔS) von der Vergleichsinformation (S7) aufweist.

2. Elektronisches Modul (100) gemäß Anspruch 1, ferner mit folgendem Merkmal:
einer Steuerungseinrichtung (160), die mit der Überwachungsfeld-Erzeugungsanordnung (130) und der Überwachungsfeld-Erfassungsanordnung (140) gekoppelt ist und diese ansteuert und ausliest, um das Überwachungsfeld zu erzeugen und die Feldkomponenten des Überwachungsfelds mittels der Überwachungsfeld-Erfassungsanordnung (140) zu erfassen, und um die Überwachungsinformation (SN) der Auswerteeinrichtung (150) bereitzustellen.

3. Elektronisches Modul (100) gemäß Anspruch 1, wobei die Auswerteeinrichtung (150) Teil der Steuerungseinrichtung (160) ist.

4. Elektronisches Modul nach einem der Ansprüche 2 oder 3, wobei die Steuerungseinrichtung (160) ausgebildet ist, um bei einer Initialisierung des elektronischen Moduls (100) die Überwachungsfeld-Erzeugungsanordnung (130) anzusteuern, um ein initiales Überwachungsfeld zu erzeugen, und ferner ausgebildet ist, um mittels der Überwachungsfeld-Erfassungsanordnung (140) initiale Feldkomponenten des initialen Überwachungsfelds zu erfassen und diese erfassten Feldkomponenten oder davon abgeleitete Größen als der Vergleichsinformation (S7) abzuspeichern.

5. Elektronisches Modul (100) gemäß einem der Ansprüche 2 bis 4, wobei die Steuerungseinrichtung (160) einen Programmcode aufweist und verwendet, um die Überwachungsfeld-Erzeugungsanordnung (130) und die Überwachungsfeld-Erfassungsanordnung (140) anzusteuern und die Vergleichsinformation (S7) initial zu ermitteln und in einem nicht-flüchtigen Speicher abzuspeichern, und wobei die Steuerungseinrichtung (160) ausgebildet ist, nach der initialen Ermittlung und Abspeicherung der Vergleichsinformation (S7) den dafür verwendeten Programmcode zu löschen.

6. Elektronische Modul (100) gemäß einem der Ansprüche 2 bis 4, wobei die Steuerungseinrichtung (160) ausgebildet ist, die Überwachungsfeld-Erzeugungsanordnung (130) und die Überwachungsfeld-Erfassungsanordnung (140) anzusteuern, um in vorgegebenen zeitlichen Abständen eine aktualisierte Vergleichsinformation zu ermitteln und diese aktualisierte Vergleichsinformation als die Vergleichsinformation (S7) in dem nicht-flüchtigen Speicher abzuspeichern.

7. Elektronisches Modul (100) gemäß Anspruch 6, wobei die Steuerungseinrichtung (160) ausgebildet ist, die Vergleichsinformation (S7) mit der aktualisierten Vergleichsinformation zu vergleichen und nur dann die aktualisierte Vergleichsinformation als die Vergleichsinformation abzuspeichern, wenn keine über einen dafür vorgegebenen Toleranzwert hinausgehende Abweichung zwischen der bisherigen Vergleichsinformation und der aktualisierten Vergleichsinformation vorliegt.

8. Elektronisches Modul (100) gemäß einem der Ansprüche 2 bis 7, wobei die Steuerungseinrichtung (160) ausgebildet ist, um die integrierte Schaltungsanordnung (120) für den Fall, dass das Vergleichsergebnis (S8) der Auswerteeinrichtung (150) auf eine Manipulation des elektronischen Moduls (100) hinweist, zumindest teilweise physisch unbrauchbar zu machen und/oder in der integrierten Schaltungsanordnung gespeicherte, vorgegebene Daten zu löschen.

9. Elektronisches Modul (100) gemäß einem der vorhergehenden Ansprüche, wobei die leitfähig ausgebildeten Wandbereiche (112-n) der beiden Überwachungskavitäten (110-2, 110-3) ausgebildet sind, um mittels der Überwachungsfeld-Erzeugungsanordnung (130) eine reproduzierbare Feldverteilung mit reproduzierbaren Feldkomponenten in den beiden Überwachungskavitäten (110-2, 110-3) zu erhalten.

10. Elektronisches Modul gemäß Anspruch 9, wobei gegenüberliegend oder benachbart angeordnete leitfähige Wandbereiche (112-n) der beiden Überwachungskavitäten (110-2, 110-3) kapazitiv gekoppelt ausgebildet sind, so dass bei Anlegen unterschiedlicher Potentiale an diese Wandbereiche eine elektrische Feldkomponente des Überwachungsfelds in der beiden Überwachungskavitäten (110-2, 110-3) erzeugbar ist.

11. Elektronisches Modul (100) gemäß einem der Ansprüche 9 oder 10, wobei die leitfähigen Wandbereiche (112-n) horizontale Metallisierungsschichten als auch vertikal dazu angeordnete Durchführungen (Vias) aufweisen, um kontinuierlich metallisierte Seitenwandbereiche der beiden Überwachungskavitäten (110-2, 110-3) zu bilden.

12. Elektronisches Modul gemäß Anspruch 11, wobei die vertikal angeordneten Durchführungen (Vias) mehrreihig angeordnet sind.

13. Elektronisches Modul gemäß Anspruch 11 oder 12, wobei die beiden Überwachungskavitäten (110-2, 110-3) jeweils als ein faradayscher Käfig ausgebildet sind.

14. Elektronisches Modul gemäß einem der vorhergehenden Ansprüche, wobei die Überwachungsfeld-Erzeugungsanordnung (130) eine Antennenstruktur, eine integrierte Spule und/oder kapazitiv gekoppelte leitfähige Wandbereiche aufweist.

15. Elektronisches Modul (100) gemäß einem der vorhergehenden Ansprüche, wobei die Überwachungsfeld-Erfassungsanordnung (140) eine Mehrzahl von induktiven Sensoren zur Erfassung einer Magnetfeldkomponente, einer Mehrzahl von kapazitiven Sensoren zur Erfassung einer elektrischen Feldkomponente und/oder eine Mehrzahl von Antennen zum Erfassen einer elektromagnetischen Feldkomponente aufweist.

16. Elektronisches Modul (100) gemäß Anspruch 15, wobei die Sensorelemente der Überwachungsfeld-Erfassungsanordnung (140) verteilt in den beiden Überwachungskavitäten (110-2, 110-3) angeordnet sind, um die unterschiedlichen Feldkomponenten des Überwachungsfelds zu erfassen.

17. Elektronisches Modul (100) gemäß einem der vorhergehenden Ansprüche, wobei die Auswerteeinrichtung (150) als eine Vergleichseinrichtung oder ein Komparator ausgebildet ist.

18. Elektronisches Modul (100) gemäß einem der vorhergehenden Ansprüche, wobei die Systemintegrationskavität (110-1) vollständig zwischen den beiden Überwachungskavitäten (110-2, 110-3) angeordnet und eingebettet ist.

19. Elektronisches Modul (100) gemäß einem der vorhergehenden Ansprüche, wobei die Vergleichsinformation zugriffssicher in einem nicht-flüchtigen Speicherbereich in dem elektronischen Modul (100) abgespeichert ist.

20. Elektronisches Modul (100) gemäß einem der vorhergehenden Ansprüche, wobei die integrierte Schaltungsanordnung (120) eine Selbstzerstörungsschaltungsanordnung (170) aufweist, die auf eine Anweisung von der Steuerungseinrichtung (160) hin die integrierte Schaltungsanordnung mit einer stark erhöhten Versorgungsspannung versorgt, um die integrierte Schaltungsanordnung (120) zumindest abschnittsweise (bestimmte Elemente) physisch zu beschädigen oder zu zerstören und/oder gespeicherte Daten in vorgegebenen Speicherbereichen zu löschen.

21. Elektronisches Modul (100) gemäß Anspruch 20, wobei die Selbstzerstörungsschaltungsanordnung (170) einen Spannungsregler zum Bereitstellen der stark erhöhten Versorgungsspannung aufweist.

22. Elektronisches Modul (100) gemäß einem der vorhergehenden Ansprüche, wobei die beiden Überwachungskavitäten (110-2, 110-3) unterschiedliche und abgetrennte Innenvolumenbereiche in dem Gehäuse (110) definieren.

## Claims

1. Electronic module (100) for providing an electronic functionality, comprising:
a housing (110) comprising a system integration cavity (110-1) and two monitoring cavities (110-2, 110-3), the system integration cavity (110-1) being arranged, at least with regard to some areas, between the two monitoring cavities (110-2, 110-3), and the system integration cavity (110-1) and the two monitoring cavities (110-2, 110-3) comprising conductive wall areas (112-n),
an integrated circuit arrangement (120) for providing the electronic functionality, said integrated circuit arrangement (120) being arranged inside the system integration cavity (110-1),
a monitoring-field generating arrangement (130, 130-1, 130-2) for generating field components of a monitoring field (132, 134) within the two monitoring cavities (110-2, 110-3),
a monitoring-field detection arrangement (140, 140-1, 140-2) for detecting, in each case, a field component of the monitoring field within the two monitoring cavities (110-2, 110-3) and for providing monitoring information (SN) on the basis of the detected field component of the monitoring field, and
an evaluation means (150) for comparing the monitoring information (SN) to stored comparison information (S7) so as to obtain a comparison result (S8), which will then indicate manipulation of the electronic module if the monitoring information (SN) indicates a deviation (ΔS) from the comparison information (S7) that goes beyond a predefined tolerance range.

2. Electronic module (100) as claimed in claim 1, further comprising:
a control means (160) coupled to the monitoring-field generating arrangement (130) and the monitoring-field detection arrangement (140) and controlling and reading same so as to generate the monitoring field and to detect the field components of the monitoring field by means of the monitoring-field detection arrangement (140) and to provide the monitoring information (SN) to the evaluation means (150).

3. Electronic module (100) as claimed in claim 1, wherein the evaluation means (150) is part of the control means (160).

4. Electronic module as claimed in any of claims 2 or 3, wherein the control means (160) is configured to control the monitoring-field generating arrangement (130) upon initialization of the electronic module (100), so as to generate an initial monitoring field, and is further configured to detect, by means of the monitoring-field detection arrangement (140), initial field components of the initial monitoring field and to store said detected field components or quantities derived therefrom as the comparison information (S7).

5. Electronic module (100) as claimed in any of claims 2 to 4, wherein the control means (160) comprises a program code and uses it so as to control the monitoring-field generating arrangement (130) and the monitoring-field detection arrangement (140) and to initially determine the comparison information (S7) and to store it in a non-volatile memory, and wherein the control means (160) is configured to delete, following said initial determination and storing of the comparison information (S7), the program code used therefor.

6. Electronic module (100) as claimed in any of claims 2 to 4, wherein the control means (160) is configured to control the monitoring-field generating arrangement (130) and the monitoring-field detection arrangement (140) so as to determine, at predefined time intervals, updated comparison information and to store said updated comparison information in the non-volatile memory as the comparison information (S7).

7. Electronic module (100) as claimed in claim 6, wherein the control means (160) is configured to compare the comparison information (S7) to the updated comparison information and to store the updated comparison information as the comparison information only if there is no deviation between the previous comparison information and the updated comparison information that goes beyond a tolerance value predefined for this.

8. Electronic module (100) as claimed in any of claims 2 to 7, wherein the control means (160) is configured to render the integrated circuit arrangement (120) at least partly physically unserviceable and/or to delete predefined data stored in the integrated circuit arrangement in case the comparison result (S8) of the evaluation means (150) indicates manipulation of the electronic module (100).

9. Electronic module (100) as claimed in any of the previous claims, wherein the wall areas (112-n), which are configured to be conductive, of the two monitoring cavities (110-2, 110-3) are configured to obtain, by means of the monitoring-field generating arrangement (130), a reproducible field distribution with reproducible field components within the two monitoring cavities (110-2, 110-3).

10. Electronic module as claimed in claim 9, wherein conductive wall areas (112-n), which are arranged to be opposite or adjacent to one another, of the two monitoring cavities (110-2, 110-3) are configured to be capacitively coupled, so that upon application of different potentials to said wall areas, an electric field component of the monitoring field may be generated within the two monitoring cavities (110-2, 110-3).

11. Electronic module (100) as claimed in any of claims 9 or 10, wherein the conductive wall areas (112-n) comprise horizontal metallization layers as well as vias arranged vertically thereto so as to form continually metalized side wall areas of the two monitoring cavities (110-2, 110-3).

12. Electronic module as claimed in claim 11, wherein the vertically arranged vias are arranged in several rows.

13. Electronic module as claimed in claims 11 or 12, wherein the two monitoring cavities (110-2, 110-3) are each configured as a Faraday cage.

14. Electronic module as claimed in any of the previous claims, wherein the monitoring-field generating arrangement (130) comprises an antenna structure, an integrated coil and/or capacitively coupled conductive wall areas.

15. Electronic module (100) as claimed in any of the previous claims, wherein the monitoring-field detection arrangement (140) comprises a plurality of inductive sensors for detecting a magnetic field component, a plurality of capacitive sensors for detecting an electric field component, and/or a plurality of antennas for detecting an electromagnetic field component.

16. Electronic module (100) as claimed in claim 15, wherein the sensor elements of the monitoring-field detection arrangement (140) are arranged to be distributed within the two monitoring cavities (110-2, 110-3) so as to detect the different field components of the monitoring field.

17. Electronic module (100) as claimed in any of the previous claims, wherein the evaluation means (150) is configured as a comparison means or a comparator.

18. Electronic module (100) as claimed in any of the previous claims, wherein the system integration cavity (110-1) is arranged and embedded entirely between the two monitoring cavities (110-2, 110-3).

19. Electronic module (100) as claimed in any of the previous claims, wherein the comparison information is stored, in a tamper-proof manner, in a non-volatile memory area in the electronic module (100).

20. Electronic module (100) as claimed in any of the previous claims, wherein the integrated circuit arrangement (120) comprises a self-destruction circuit arrangement (170) which, upon an instruction from the control means (160), provides the integrated circuit arrangement with a highly increased supply voltage so as to physically damage or destroy the integrated circuit arrangement (120) at least in portions (specific elements), and/or to delete stored data in predefined memory areas.

21. Electronic module (100) as claimed in claim 20, wherein the self-destruction circuit arrangement (170) comprises a voltage regulator for providing the highly increased supply voltage.

22. Electronic module (100) as claimed in any of the previous claims, wherein the two monitoring cavities (110-2, 110-3) define different and separated inner-volume areas within the housing (110).

## Revendications

1. Module électronique (100) destiné à mettre à disposition une fonctionnalité électronique, aux caractéristiques suivantes:
un boîtier (110) avec une cavité d'intégration de système (110-1) et deux cavités de surveillance (110-2, 110-3), où la cavité d'intégration de système (110-1) est disposée au moins par zone entre les deux cavités de surveillance (110-2, 110-3), et où la cavité d'intégration de système (110-1) et les deux cavités de surveillance (110-2, 110-3) présentent des zones de paroi conductrices (112-n),
un aménagement de circuit intégré (120) destiné à mettre à disposition la fonctionnalité électronique, où l'aménagement de circuit intégré (120) est disposé dans la cavité d'intégration de système (110-1),
un aménagement de génération de champ de surveillance (130, 130-1, 130-2) destiné à générer des composantes de champ d'un champ de surveillance (132, 134) dans les deux cavités de surveillance (110-2, 110-3),
un aménagement de détection de champ de surveillance (140, 140-1, 140-2) destiné à détecter une composante de champ respective du champ de surveillance dans les deux cavités de surveillance (110-2, 110-3) et à mettre à disposition une information de surveillance (SN) sur base de la composante de champ détectée du champ de surveillance, et
un moyen d'évaluation (150) destiné à comparer l'information de surveillance (SN) avec une information de comparaison mémorisée (S7) pour obtenir un résultat de comparaison (S8) qui indique une manipulation du module électronique lorsque l'information de surveillance (SN) présente, par rapport à l'information de comparaison (S7), un écart (ΔS) qui excède une plage de tolérance prédéterminée.

2. Module électronique (100) selon la revendication 1, par ailleurs à la caractéristique suivante:
un moyen de commande (160) qui est couplé à l'aménagement de génération de champ de surveillance (130) et à l'aménagement de détection de champ de surveillance (140) et qui commande et lit ces derniers pour générer le champ de surveillance et pour détecter les composantes de champ du champ de surveillance au moyen de l'aménagement de détection de champ de surveillance (140) et pour mettre l'information de surveillance (SN) à disposition du moyen d'évaluation (150).

3. Module électronique (100) selon la revendication 1, dans lequel le moyen d'évaluation (150) fait partie du moyen de commande (160).

4. Module électronique selon l'une des revendications 2 ou 3, dans lequel le moyen de commande (160) est conçu pour commander, lors d'une initialisation du module électronique (100), l'aménagement de génération de champ de surveillance (130) pour générer un champ de surveillance initial, et est par ailleurs conçu pour détecter, à l'aide de l'aménagement de détection de champ de surveillance (140), les composantes de champ initiales du champ de surveillance initial et pour mémoriser ces composantes de champ détectées, ou les grandeurs dérivées de ces dernières, comme information de comparaison (S7).

5. Module électronique (100) selon l'une des revendications 2 à 4, dans lequel le moyen de commande (160) présente et utilise un code de programme pour commander l'aménagement de génération de champ de surveillance (130) et l'aménagement de détection de champ de surveillance (140) et pour déterminer initialement l'information de comparaison (S7) et pour la mémoriser dans une mémoire non volatile, et dans lequel le moyen de commande (160) est conçu pour supprimer, après la détermination initiale et la mémorisation de l'information de comparaison (S7), le code de programme utilisé à cet effet.

6. Module électronique (100) selon l'une des revendications 2 à 4, dans lequel le moyen de commande (160) est conçu pour commander l'aménagement de génération de champ de surveillance (130) et l'aménagement de détection de champ de surveillance (140) pour déterminer, à des intervalles de temps prédéterminés, une information de comparaison mise à jour et pour mémoriser cette information de comparaison mise à jour comme information de comparaison (S7) dans la mémoire non volatile.

7. Module électronique (100) selon la revendication 6, dans lequel le moyen de commande (160) est conçu pour comparer l'information de comparaison (S7) avec l'information de comparaison mise à jour et pour ne mémoriser l'information de comparaison mise à jour comme information de comparaison que s'il n'est pas présent d'écart qui excède une valeur de tolérance prédéterminée à cet effet entre l'information de comparaison existant jusqu'à présent et l'information de comparaison mise à jour.

8. Module électronique (100) selon l'une des revendications 2 à 7, dans lequel le moyen de commande (160) est conçu pour rendre au moins partiellement physiquement inutilisable l'aménagement de circuit intégré (120) au cas où le résultat de comparaison (S8) du moyen d'évaluation (150) indique une manipulation du module électronique (100) et/ou pour supprimer les données prédéfinies mémorisées dans l'aménagement de circuit intégré.

9. Module électronique (100) selon l'une des revendications précédentes, dans lequel les zones de paroi réalisées conductrices (112-n) des deux cavités de surveillance (110-2, 110-3) sont conçues pour obtenir, à l'aide de l'aménagement de génération de champ de surveillance (130), une distribution de champ reproductible avec des composantes de champ reproductibles dans les deux cavités de surveillance (110-2, 110-3).

10. Module électronique selon la revendication 9, dans lequel les zones de paroi conductrices (112-n) disposées opposées ou adjacentes l'une à l'autre des deux cavités de surveillance (110-2, 110-3) sont conçues de manière couplée de manière capacitive, de sorte que puisse être générée, en cas d'application de potentiels différents à ces zones de paroi, une composante de champ électrique du champ de surveillance dans les deux cavités de surveillance (110-2, 110-3).

11. Module électronique (100) selon l'une des revendications 9 ou 10, dans lequel les zones de paroi conductrices (112-n) présentent des couches de métallisation horizontales ainsi que des trous traversants (vias) disposés verticaux par rapport à ces dernières, pour former des zones de paroi latérale métallisées en continu des deux cavités de surveillance (110-2, 110-3).

12. Module électronique selon la revendication 11, dans lequel les trous traversants (vias) disposés verticalement sont disposés en plusieurs rangées.

13. Module électronique selon la revendication 11 ou 12, dans lequel les deux cavités de surveillance (110-2, 110-3) sont conçues, chacune, comme une cage de Faraday.

14. Module électronique selon l'une des revendications précédentes, dans lequel l'aménagement de génération de champ de surveillance (130) présente une structure d'antenne, une bobine intégrée et/ou des zones de paroi conductrices couplées de manière capacitive.

15. Module électronique (100) selon l'une des revendications précédentes, dans lequel l'aménagement de détection de champ de surveillance (140) présente une pluralité de capteurs inductifs destinés à détecter une composante de champ magnétique, une pluralité de capteurs capacitifs destinés à détecter une composante de champ électrique et/ou une pluralité d'antennes destinées à détecter une composante de champ électromagnétique.

16. Module électronique (100) selon la revendication 15, dans lequel les éléments capteurs de l'aménagement de détection de champ de surveillance (140) sont disposés répartis dans les deux cavités de surveillance (110-2, 110-3) pour détecter les différentes composantes de champ du champ de surveillance.

17. Module électronique (100) selon l'une des revendications précédentes, dans lequel le moyen d'évaluation (150) est conçu sous forme de moyen de comparaison ou de comparateur.

18. Module électronique (100) selon l'une des revendications précédentes, dans lequel la cavité d'intégration de système (110-1) est disposée et incorporée entièrement entre les deux cavités de surveillance (110-2, 110-3).

19. Module électronique (100) selon l'une des revendications précédentes, dans lequel l'information de comparaison est mémorisée à accès sécurisé dans une zone de mémoire non volatile du module électronique (100).

20. Module électronique (100) selon l'une des revendications précédentes, dans lequel l'aménagement de circuit intégré (120) présente un aménagement de circuit autodestructeur (170) qui alimente, sur une instruction du moyen de commande (160), l'aménagement de circuit intégré par une tension d'alimentation fortement augmentée, pour endommager ou pour détruire, au moins par sections (certains éléments), physiquement l'aménagement de circuit intégré (120) et/ou pour supprimer les données mémorisées dans des zones de mémoire prédéterminées.

21. Module électronique (100) selon la revendication 20, dans lequel l'aménagement de circuit d'autodestruction (170) présente un régulateur de tension destiné à mettre à disposition la tension d'alimentation fortement augmentée.

22. Module électronique (100) selon l'une des revendications précédentes, dans lequel les deux cavités de surveillance (110-2, 110-3) définissent des zones de volume intérieur différentes et séparées dans le boîtier (110).
